**Europäisches Patentamt**

**European Patent Office**

**Office européen des brevets**

(19)

(11) Veröffentlichungsnummer: **0 335 973**
**A1**

# EUROPÄISCHE PATENTANMELDUNG

veröffentlicht nach Art. 158 Abs. 3 EPÜ

(12)

(21) Anmeldenummer: **88903121.7**

(51) Int. Cl.⁴: **B 60 H 1/20**

(22) Anmeldetag: **17.12.87**

Daten der zugrundeliegenden internationalen Anmeldung:

(86) Internationale Anmeldenummer:
**PCT/SU 87/00147**

(87) Internationale Veröffentlichungsnummer:
**WO 89/03317 (20.04.89 89/9)**

(30) Priorität: **09.10.87 SU 4311230**

(43) Veröffentlichungstag der Anmeldung: **11.10.89**
**Patentblatt 89/41**

(84) Benannte Vertragsstaaten: **CH DE FR GB IT LI NL SE**

(71) Anmelder: **KIEVSKY POLITEKHNICHESKY INSTITUT IMENI 50-LETIA VELIKOI OKTYABRSKOI SOTSIALISTICHESKOI REVOLJUTSII, pr. Pobedy, 37, Kiev, 252056 (SU)**
Anmelder: **ODESSKY INZHENERNO-STROITELNY INSTITUT, ul. Didrikhsona, 4, Odessa, 270029 (SU)**

(72) Erfinder: **MAISOTSENKO, Valery Stepanovich, ul. Sadovaya, 21-7, Odessa, 270104 (SU)**
Erfinder: **GERSHUNI, Alexandr Naumovich, ul. Ulyanovykh, 33-19, Kiev, 252150 (SU)**
Erfinder: **ZARIPOV, Vladilen Kominovich, pr. Tychiny, 12a-66, Kiev, 252098 (SU)**
Erfinder: **SEMENA, Mikhail Grigorievich, ul. V.Pika, 11-63, Kiev, 252190 (SU)**
Erfinder: **LEVTEROV, Alexandr Iliich, ul. Dralzera, 8a-54, Kiev, 252217 (SU)**
Erfinder: **KOLOSOVSKY, Mikhail Olegovich, ul. Bastionnaya, 1/36-6, Kiev, 252014 (SU)**

(74) Vertreter: **Kohlmann, Karl Friedrich, Dipl.-Ing., Hoffmann, Eitle & Partner Arabellastrasse 4 (Sternhaus), D-8000 München 81 (DE)**

(54) **HEIZ-/LUFTKÜHLUNGSVORRICHTUNG FÜR KABINE EINES TRANSPORTMITTELS.**

(57) Im Gehäuse (I) des Luftheizers und -kühlers ist eine zusätzliche Trennwand (I3) eingebaut, die sich zwischen der Wand des Gehäuses (I) und der Haupttrennwand (2) unter Bildung einer Sektion (I4) für den Durchtritt des zu verwertbaren Wärmeträgers befindet. Die wärmeübertragenden Elemente (5) sind mit Rippen-Einbaute (I5, I6 I7) versehen, die in der gebildeten Sektion (I4) und der Sektion (4) für den Durchtritt des zu befeuchtenden Luftstroms f auf der Oberfläche der wärmeübertragenden Elemente (5) frei montiert sind, wobei die kapillarporige Beschichtung (6) auf der Oberfläche der Rippen-Einbaute (I5) hergestellt ist.

## LUFTHEIZER UND -KÜHLER FUR DIE KABINE EINES VERKEHRSMITTELS

### Gebiet der Technik

Die vorliegende Erfindung bezieht sich auf die Klimatechnik und betrifft insbesondere einen Luftheizer und -kühler für die Kabinen und Fahrgasträume von Verkehrsmitteln.

Die Erfindung kann auch zum Vorwärmen und Kühlen der Luft von Produktions- und Wohnräumen Anwendung finden.

### Zugrundeliegender Stand der Technik

Es sind Heizvorrichtungen zum Vorwärmen der Zuluft und Heizen der Kabine eines Verkehrsmittels bekannt, bei denen hochwirksame Wärmeübertragungselemente zum Einsatz kommen. Diese Elemente funktionieren nach dem Prinzip eines geschlossenen Verdampfungs- und Kondensationskreislaufes. Die Rückführung der Arbeitsflüssigkeit aus der Kondensationszone in die Verdampfungszone innerhalb der Elemente erfolgt über die Kapillarenstruktur unter der Wirkung von Kapillarenkräften (solche Wärmeübertragungselemente werden als Wärmerohre bezeichnet) oder nur über die Wand der Elementenhülle unter der Wirkung der Schwerkraft (zweiphasige Thermosiphons). Diw wärmeübertragenden Elemente werden im Gehäuse des Luftheizers untergebracht und gehen durch eine senkrechte oder eine waagerechte Trennwand hindurch, die das Gehäuse in Sektionen für den Durchtritt der vorzuwärmenden Luft bzw. des verwertbaren Wärmeträgers der Auspuffgase (heisser Flüssigkeit, heisser Abluft und dgl.) unterteilen.

Der Hauptnachteil dieser Vorrichtungen besteht darin, dass sie die nicht kühlen können und z.B. in der Sommerzeit die Arbeitsbehaglichkeit für den Fahrer nicht gewährleisten. Darüber hinaus führen die Luftheizer der Kabine eine warme trockene Luft zu, deren Feuchtigkeitsgrad wesentlich tiefer unter den Behaglichkeitswerten liegt.

Es sind Kühlvorrichtungen für die in die Kabine eines Verkehrstittels eintretende Luft bekannt, bei denen die Kühlung durch wirksames Verdampfen der Flüssigkeit vor sich geht. Dies sind Vorrichtungen der verdampfenden, der indirekt verdampfenden und der regenerativen indirekt verdamp-

fenden Luftkühlung.

Der Nachteil der Luftkühler vom Verdampfungs- und Indirektverdampfungstyp ist eine geringe Kühlungstiefe der Luft. Die Kühlvorrichtungen vom regenerativen Indirektverdampfungstyp sind von dem genannten Nachteil frei, doch können sie wie auch die obenerwähnten Kühlertype die Luft nicht vorwärmen und stellen z.B. in der Winterzeit die erforderlichen Behaglichkeitsbedingungen in der Kabine nicht sicher.

Es ist eine Vorrichtung zum Heizen und Kühlen der Luft in der Kabine eines Verkehrsmittels (SU, A, 975463) bekannt. Diese Vorrichtung enthält ein Gehäuse, das durch eine waagerechte Trennwand in zwei Sektionen, und zwar eine obere und eine untere unterteilt ist, Auffangschalen für Wasser in der unteren Sektion, in der Trennwand senkrecht verlegte Wärmerohre, bei denen die Aussenfläche der unteren Enden mit einem mit Wasser in Berührung stehenden kapillarporigen Werkstoff bedeckt ist, ein Fenster in der waagerechten Trennwand mit einer darin eingebauten regelbaren Klappe, das den Ausgangsteil der oberen Sektion mit dem Eingangsteil der unteren Sektion verbindet. Die betreffende Vorrichtung arbeitet folgenderweise. In der Sommerzeit strömt die heisse Zuluft über die obere Sektion und wird an ihrem Ausgang in zwei Teilströme aufgeteilt. Der erste Teilstrom wird der Kabine zugeleitet, wobei der zweite Teilstrom durch das Fenster in der Trennwand in die untere Sektion eintritt, wo er im Umströmen des feuchten kapillarporigen Werkstoffes die Feuchte zum Verdampfen bringt, Infolge dessen werden die unteren Enden der Wärmerohre gekühlt,　　　und der Arbeitsstoff innerhalb der Wärmerohre kondensiert sich. Das Kondensat fliesst über die Kapillarenstruktur den oberen Enden der Wärmerohre zu und siedet aus, indem er der Heissluft die Wärme entzieht. Die abgekühlte Luft strömt der Kabine (der erste Teilstrom) und der unteren Sektion (der zweite Teilstrom) zu, während die Arbeitsstoffdämpfe in die unteren Enden der Wärmerohre gelangen, wo sie sich kondensieren. Darauf wiederholt sich der Kreislauf. In der Winterzeit wird das Fenster in der Trennwand durch die Klappe geschlossen, und es gibt kein Wasser in der Auffangschale. Die Auspuffgase des Verbrennungsmotors kommen in die untere Sektion, wo sie im Umströmen der Enden der Wärmerohre den Arbeitsstoff zum Sieden bringen, welcher dampfförmig in die oberen Enden der Wärmerohre strömt und sich kondensiert, indem die Wärme an den die obere Sektion durchströmenden Kaltluftstrom abgegeben wird. Der Atmosphärenluftstrom wird erwärmt und tritt in die Kabine ein.

Die betreffende Erfindung, in der das Prinzip der regenerativen indirekt verdampfenden Kühlung realisiert ist, ist von einer Reihe der Nachteile der eingangs erwähnten Vorrichtungen frei, weil sie in ein und derselben Vorrichtung sowohl die Luftvorwärmung (im Winter) als auch die Luftkühlung (im Sommer) zulässt und somit die Arbeitsbedingungen der Fahrer in jeder Jahreszeit verbessert. Die Erweiterung der funktionalen Möglichkeiten dieser Vorrichtung auf dem Gebiet der Luftbehandlung führte jedoch zum Auftritt einer Anzahl von Nachteilen.

Ein der Hauptnachteile bei der bekannten Vorrichtung besteht darin, dass der zweite (zu befeuchtende) Luftstrom im Sommer in derselben (unteren) Sektion wie der Auspuffgasstrom im Winter fliesst. Dies führt unvermeidlich im Winter zuerst zu einer verschlechterten Benetzung des kapillarporigen Werkstoffes mit Wasser, dann zum Verstopfen der Poren mit Verbrennungsprodukten und zuletzt in der Sommerzeit zur schnellen Korrosion des kapillarporigen Werkstoffes und der Wärmerohre wegen Säurelösungen, die sich durch Auflösen der Elementenoxide aus den Verbrennungsprodukten (in Poren des Werkstoffes) im Wasser bilden. Die verstopften Poren des kapillarporigen Werkstoffes werden eine gute Benetzung und die Wasserhebung auf die ganze Höhe der unteren Enden der Wärmerohre verhindern. Diese Vorrichtung wird also unzuverlässig arbeiten, und ihre Lebensdauer wird äusserst begrenzt sein.

Die obenbeschriebene Vorrichtung besitzt eine niedrige spezifische, d.h. auf ihre Volumeneinheit bezogene Kälte- und Wärmeleistung, die auf die ungenügende Wirksamkeit der Wärme- und Stoffaustauschprozesse in den Sektionen zurückzuführen ist. Die geringe Wirksamkeit dieser Prozesse er-

gibt sich aus der kleinen Wärme- und Stoffaustauschoberfläche, weil die Wärmerohre glattwandig ausgebildet sind, während die porige Beschichtung auf der dem Inhalt nach geringen Aussenfläche der Körper der Wärmerohre hergestellt ist.

In der kalten Jahreszeit wird die Luftverwärmung in der bekannten Lösung mit einem starken Abfall der relativen Luftfeuchtigkeit begleitet. Die Luftverwärmung beispielsweise von minus I0°C (sogar bei einer sehr hohen relativen Luftfeuchtigkeit von 90%) auf plus 20°C wird mit der Senkung der relativen Luftfeuchtigkeit auf I0% begleitet, was viel niedriger als die behagliche Luftfeuchtigkeit von mindestens 50% ist.

Ungünstig ist die senkrechte Verlegung der Wärmerohre in der waagerechten Trennwand, weil beim Kühlen der Luft im Sommer die Wärmerohre in äusserst unvorteilhaften gravitationswidrigen Verhältnissen arbeiten, und zwar die Arbeitsflüssigkeit bewegt sich aus den unteren Enden der Wärmerohre in die oberen über die Kapillarenstruktur gegen die Wirkungsrichtung der Schwerkraft. Dies verringert wesentlich die wärmeübertragende Fähigkeit der Wärmerohre, beispielsweise im Vergleich zu ihrer waagerechten Verlegung, wodurch die Leistung der Anlage sinkt.

Die bekannte Vorrichtung ist kompliziert in Bedienung und Reparatur, weil sie erstens eine häufige periodische Reinigung des kapillarenporigen Werkstoffes von den verstopfenden Verbrennungsprodukten oder dessen vollständige Entfernung von der Oberfläche der Wärmerohre mit nachfolgendem Aufbringen eines neuen porigen Werkstoffes fordert; und zweitens wird das Wasser während des Betriebs der Vorrichtung aus der Auffangschale verdampfen, und der Fahrer wied stets das Wasser in die Auffangschale nachzufüllen haben.

## Offenbarung der Erfindung

Ziel der Erfindung ist es, die obenbeschriebenen Nachteile zu beseitigen.

Der Erfindung liegt die Aufgabe zugrunde, einen Luftheizer und -kühler mit einer derartigen konstruktiven Ge-

staltung der Sektionen für Wärmeträgerströme und der wärmeübertragenden Elemente zu schaffen, dass seine Betriebskenndaten verbessert sowie für den Fahrer behagliche Arbeitsbedingungen in jeder Jahreszeit sichergestellt werden können.

Diese Aufgabe wird dadurch gelöst, dass bei einem Luftheizer und -kühler für die Kabine eines Verkehrsmittels, enthaltend ein Gehäuse, welches durch eine Trennwand in eine Sektion für den Durchtritt des zu kühlenden Luftstromes und eine Sektion für den Durchtritt des zu befeuchtenden Luftstroms unterteilt ist, innerhalb des Gehäuses untergebrachte und durch die Trennwand hindurchgehende wärmeübertragende Elemente, welche in der Sektion für den Durchtritt des zu befeuchtenden Luftstroms eine kapillarporige Beschichtung aufweisen, die mit dem flüssigen Medium in Berührung kommt, im Gehäuse vorgesehene Offnungen für den Eintritt und Austritt der zu kühlenden Luft bzw. des verwertbaren Wärmeträgers, ein Fenster mit einer regelbaren Klappe, das die Sektionen miteinander verbindet und in der genannten Trennwand ausgeführt ist, erfindungsgemäss eine zusätzliche Trennwand eingebaut ist, die sich zwischen der Wand des Gehäuses und der Haupttrennwand unter Bildung einer Sektion für den Durchtritt des verwertbaren Wärmeträgers befindet, dass die wärmeübertragenden Elemente mit Rippen-Einbauten versehen sind, die in der gebildeten Sektion und in der Sektion für den Durchtritt des zu befeuchtenden Luftstroms auf der Oberfläche der wärmeübertragenden Elemente frei montiert sind, wobei die kapillarporige Beschichtung auf der Oberfläche der Rippen-Einbauten hergestellt ist.

Es ist zweckmässig, den Ausgang der Sektion für den Durchtritt des zu befeuchtenden Luftstroms mit einer Klappe zu versehen und im Bereich dieses Ausgangs einen Stutzen mit einem regelbaren Schieber auszuführen und am Gehäuse im Bereich der Offnung für den Austritt der zu kühlenden Luft eine Offnung mit einer Klappe herzustellen.

Der Luftheizer und -kühler kann zweckmässigerweise einen Flüssigkeitsbehälter mit einem Wasserstandsregler in der Sektion für den Durchtritt der zu befeuchtenden Luft aufweisen.

Da der vorgeschlagene Luftheizer und -kühler für die Kabine eines Verkehrsmittels gerade so ausgebildet ist, wie es oben beschrieben wurde, bietet sich die Möglichkeit an, seine Betriebskenndaten zu verbessern.

Das Wesen der Erfindung besteht im folgenden. Da das Gehäuse der Vorrichtung durch eine Trennwand in eine Sektion für den Durchtritt des zu kühlenden Luftstroms und eine Sektion für den Durchtritt des zu befeuchtenden Luftstroms und des Auspuffgases unterteilt ist, kann man durch Einbau einer zusätzlichen Trennwand im Gehäuse und deren Anordnung zwischen der Wand des Gehäuses und der Haupttrennwand eine zusätzliche Sektion ausbilden, in der die wärmeübertragenden Elemente keine kapillarporige Beschichtung aufweisen, und über diese Sektion den gesamten Strom des verwertbaren Wärmeträgers, beispielsweise Auspuffgases, leiten. Dadurch wird die Verstopfung der kapillarporigen Beschichtung mit Verbrennungsprodukten vermieden. Die wärmeübertragenden Elemente müssen mit Rippen-Einbauten versehen werden, die in der neugebildeten Sektion und in der Sektion für den zu befeuchtenden Luftstrom auf der Oberfläche der wärmeübertragenden Elemente frei, d.h. unter Bildung lösbarer Verbindungen, montiert werden. Dies erlaubt erstens, die Wärmeaustauschflächen in den Sektionen für den Durchtritt der zu kühlenden Luft und des verwertbaren Wärmeträgers sowie durch Herstellung der kapillarporigen Beschichtung auf der Oberfläche der Rippen-Einbaute, die in der Sektion für den Durchtritt des zu befeuchtende Luftstroms angeordnet sind, die Wärme- und Stoffaustauschflächen in dieser letzteren Sektion mehrfach zu vergrössern. Zweitens bietet sich die Möglichkeit an, die Rippen-Einbaute, falls deren Oberfläche sich verschmutzt hat, leicht abzubauen, zu reinigen und wieder einzubauen und notwendigerfalls durch neue Rippen-Einbaute zu ersetzen.

Es ist notwendig, den Ausgang der Sektion für den Durchtritt des zu befeuchtenden Luftstroms mit einer Klappe zu versehen, im Bereich dieses Ausgangs einen Stutzen mit einem regelbaren Schieber vorzusehen und am Gehäuse im Bereich der Öffnung für den Austritt der zu kühlenden Luft eine Öffnung mit einer Klappe auszubilden und in diese Sektion in der Winterzeit einen zusätzlichen Luftstrom zu leiten. Dies ermöglicht es, neben dem warmen und trockenen Hauptluftstrom in die Kabine auch die Feuchte mit dem zusätzlichen Luftstrom zuzuführen, wodurch in der Kabine eine behagliche Luftfeuchtigkeit geschaffen wird. Die Luftfeuchtigkeit in der Kabine kann durch Änderung des Verbrauchs des zusätzlichen Luftstromes mittels des Schiebers am Stutzen eingestellt werden.

Zur Verbesserung der Betriebskenndaten wird der Luftheizer und -kühler zweckmässigerweise mit einem Flüssigkeitsbehälter ausgestattet, der einen Wasserstandsregler in der Sektion für den Durchtritt der zu befeuchtenden Luft aufweist. Dadurch kann die Vorrichtung während einer längeren Zeit ohne Nachfüllen der Flüssigkeit betrieben werden.

Der erfindungsgemäss vorgeschlagene Luftheizer und -kühler besitzt eine Anzahl von wesentlichen Vorteilen gegenüber den bekannten Vorrichtungen. Im Vergleich zu den am zweitesten verwendbaren Typen der Klimaanlagen zeichnet sich diese Vorrichtung durch einen 3 bis 6fach so niedrigen Leistungsaufwand, bezogen auf die Kälteleistungseinheit, durch eine I,5 bis 7fach so hohe Kälteleistung, bezogen auf die Volumeneinheit der Klimaanlage, durch eine um IO bis 45% kleinere Masse, einfache Konstruktion und Anfertigung aus. In der gleichen Vorrichtung sind die Funktionen der Luftkühlung und der Luftvorwärmung zusammengefasst. Die erfindungsgemässe Vorrichtung besitzt keine übliche Ausrüstung wie Verdichter, Kondensator, Erhitzer, Rohrleitungen; schädliche Arbeitsstoffe sind auch nicht eingesetzt.

Kurze Beschreibung der Zeichnungen

Das weiteren wird die Erfindung anhand konkreter Ausführungsbeispiele mit Hinweisen auf beiliegende Zeichnungen näher erläutert. In den Zeichnungen zeigt:

Fig. I den erfindungsgemässen Luftheizer und -kühler, in Draufsicht,

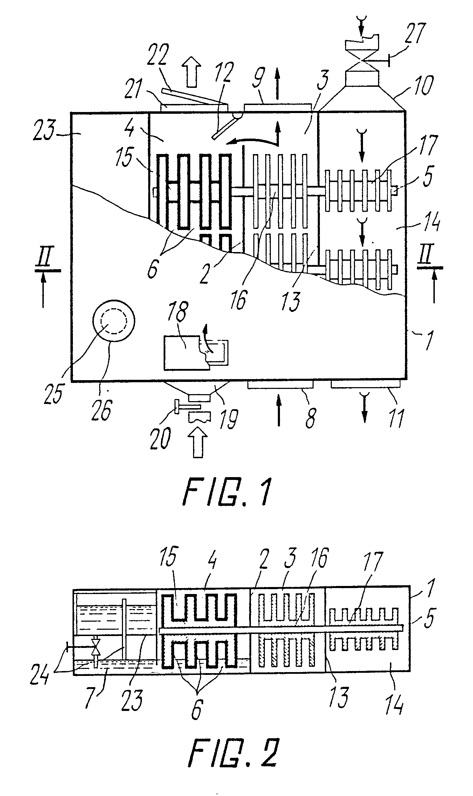

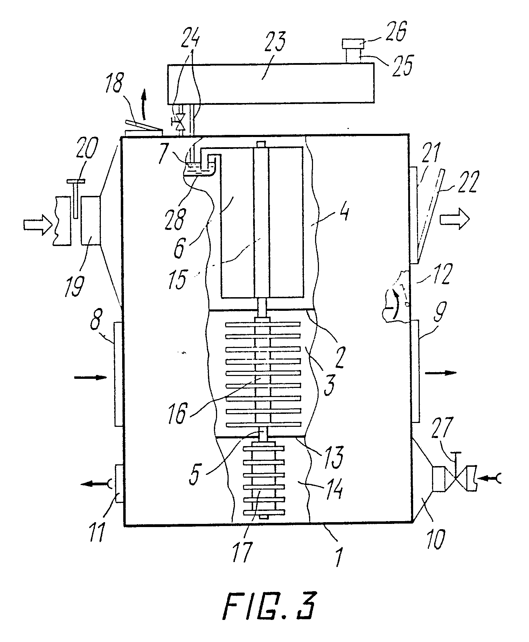

Fig. 2 den Schnitt nach Linie II-II der Fig.I,

Fig. 3 eine weitere Ausführungsform des erfindungsgemässen Luftheizers und -kühlers, in Frontansicht.

Bevorzugte Ausführungsvariante der Erfindung

Der Luftheizer und -kühler (Fig. I, 2) für die Kabine eines Verkehrsmittels besteht aus einem Gehäuse I, einer Trennwand 2, die das Gehäuse in eine Sektion 3 für den Durchtritt des zu kühlenden Luftstromes und eine Sektion 4 für den Durchtritt des zu befeuchtenden Luftstromes unterteilt. Innerhalb des Gehäuses I sind durch die Trennwand 2 hindurchgehende wärmeübertragende Elemente 5 untergebracht. Als wärmeübertragende Elemente eignen sich beispielsweise Wärmerohre, innerhalb von denen eine Kapillarenstruktur (Metallfilz, Siebe, Rillen usw.) und eine gewisse Menge Arbeitsflüssigkeit, beispielweise Wasser, vorhanden sind. Die wärmeübertragenden Elemente 5 in der Sektion 4 weisen eine kapillarporige Beschichtung 6 auf, die in einer beliebig bekannten Weise unmittelbar auf der Wärmeaustauschoberfläche ausgeführt werden kann, oder aus bekannten wasserdurchlässigen kapillarporigen Werkstoffen hergestellt, auf die Wärmeaustauschoberfläche aufgetragen und dort in irgendwelcher Weise befestigt wird. Die kapillarporige Beschichtung steht mit ihrem unteren, oberen oder ihrem anderen beliebigen Teil mit einem flüssigen Medium 7, z.B. Wasser, in Berührung.

Das Gehäuse I der Vorrichtung hat Öffnungen 8, 9 für den Eintritt und Austritt der zu kühlenden Luft und öffnungen IO, II für den Eintritt und Austritt des verwertbaren Wärmeträgers, und zwar von Auspuffgasen, der heissen Flüssigkeit aus dem Kühlsystem des Motors, der heissen Abluft u.a.

In der Trennwand 2 ist ein Fenster mit einer regelbaren Klappe I2 ausgebildet, das den Ausgang aus der Sektion 3 mit der Sektion 4 iverbindet. Im Gehäuse I ist eine zusätzliche Trennwand I3 angebracht, die sich zwischen der Wand des Gehäuses I und der Haupttrennwand 2 unter Bildung einer Sektion I4 für den Durchtritt des verwertbaren Wärmeträgers befindet. Die wärmeübertragenden Elemente 5 sind mit Rippen-Einbauten I5, I6 und I7 versehen, wobei die Rippen-Einbaute I5, I7 auf den Oberflächen der wärmeübertragenden Elemente 5 frei montiert sind. Unter freier Montage der Rippen-Einbaute wird in diesem Fall verstanden, dass diese leicht abnehmbar sind und keine starre unlösbare Verbindung mit der Oberfläche der wärmeübertragenden Elemente herstellen. Die freie Montage der Rippen-Einbaute kann beispielsweise durch Gleitpassung, irgendwelche Nuten, Schraubenverbindung u.dgl. realisiert werden. Die Montage der Rippen-Einbaute 16 kann starr unlösbar oder nach Bedarf auch frei ausgeführt sein. Auf der Oberfläche der Rippen-Einbaute 15 ist eine kapillarporige Beschichtung hergestellt.

Die erfindungsgemässe Vorrichtung kann auch derart ausgeführt sein, dass der Ausgang der Sektion 4 für den Durchtritt des zu befeuchtenden Luftstromes mit einer Klappe 18 versehen ist und im Bereich dieses Ausgangs ein Stutzen 19 mit einem regelbaren Schieber 20 vorhanden ist, während im Gehäuse 1 im Bereich der Öffnung 9 eine Öffnung 21 mit einer Klappe 22 vorhanden ist.

Die Vorrichtung kann einen Flüssigkeitsbehälter 23 mit einem Wasserstandsregler 24 in der Sektion 4 aufweisen. Als Regler kann ein beliebiger bekannter Flüssigkeitsstandregler verwendet werden, beispielsweise ein Fahrzeugsregler, der aus einer Röhre für die Luft und einer Röhre mit Wasserhahn besteht. Der Behälter 23 ist mit einem Hals 25 zum Einfüllen des Wassers und einem Stopfen 26 versehen. An der Eintrittsöffnung 10 ist ein Stutzen mit einem Hahn 27 angebracht. In der Sektion 4 kann, falls erforderlich, eine Auffangschale 28 für die Flüssigkeit (Fig. 3) vorgesehen werden.

Die Funktionsweise der Vorrichtung ist die folgende. In der Sommerzeit ist der Hahn 27 geschlossen, die regelbare Klappe 12 und die Klappe 18 sind geöffnet, der regelbare Schieber 20 und die Klappe 22 sind geschlossen. Der Behälter 23 wird über den Hals 25 mit Flüssigkeit befüllt und mit dem Stopfen 26 geschlossen. Der Hahn des Reglers 24 wird geöffnet und das Wasser fliesst der Sektion 4 oder der Auffangschale 28 zu, füllt die Sektion 4 oder die Auffangschale 28 bis zu einer vom Regler 24 vorgegebenen Standhöhe auf. Der kapillarporige Werkstoff 6 wird unter der Wirkung der Kapillarkräfte mit dem Wasser gesättigt und wird feucht. Durch die Eintrittsöffnung 8 wird der Sektion 3 der warme Strom der atmosphärischen Luft zugeleitet und an deren Ausgang in zwei Teilströme unterteilt. Der erste Teilstrom wird über die Austrittsöffnung 9 der Kabine zugeleitet, während der zweite über das Fenster mit der regelbaren Klappe I2 in die Sektion 4 eintritt, wo er die feuchte kapillarporige Beschichtung 6 an den Rippen-Einbauten I5 umströmend das Wasser zum Verdampfen bringt. Das Verdampfen des Wassers aus der Beschichtung 6 führt zum Sinken der Temperatur an der Oberfläche der Rippen-Einbaute I5. Es entsteht ein Temperaturgradient zwischen der Oberfläche der Rippen-Einbaute I5 und der Oberfläche der Rippen-Einbaute I6, und die wärmeübertragenden Elemente 5 beginnen nach dem bekannten geschlossenen Verdampfungs- und Kondensationskreislauf zu funktionieren, indem sie der die Sektion 3 durchströmenden Warmluft die Wärme entziehen. Der warme Luftstrom kühlt sich ab und wird, wie oben erwähnt, am Ausgang aus der Sektion 3 in zwei Ströme geteilt, deren erster der Kabine zugeleitet wird und dort für den Fahrer behagliche Arbeitsbedingungen schafft. Der zweite gekühlte Teilstrom wird über das Fenster mit der Klappe I2 der Sektion 4 zugeleitet, wo er wiederum die Wasserverdampfung aus der Beschichtung 6 und eine zusätzliche Temperatursenkung an der Oberfläche der Rippen-Einbaute I5 hervorruft und somit zur Vergrösserung der Wärmemenge, welche die wärmeübertragenden Elemente 5 dem Luftstrom in der Sektion 3 entnehmen, und folglich zur Senkung seiner Temperatur führt. Der die Sektion 4 durchströmende Luftstrom wird mit Wasserdämpfen befeuchtet und in die Atmosphäre abgegeben. Durch den obenbeschriebenen sich zyklisch abspielenden kontinuierlichen Prozess wird die in die Kabine eintretende Luft auf eine Temperatur abgekühlt, die unter der Temperatur des feuchten Thermometers der atmosphärischen Luft liegt. Beim Verdampfen der Flüssigkeit bleibt ihre Standhöhe in der Sektion 4 dank dem aus dem Behälter 23 ununterbrochen zulaufenden Wasser und dem Regler 24 konstant. Nach diesem Schema arbeitet die Vorrichtung als Luftkühler.

Luftkühler.

In der kalten Jahreszeit ist der Hahn 27 geöffnet, die regelbare Klappe I2 und die Klappe I8 sind geschlossen, während der regelbare Schieber 20 und die Klappe 22 sind geöffnet. Der kapillarporige Werkstoff 6 wird durch die Arbeitsgänge, die für den Betrieb der Vorrichtung in der Sommerzeit beschrieben worden sind, mit der Flüssigkeit gesättigt. Der verwertbare Wärmeträger wird durch die Öffnung IO der Sektion 4 zugeleitet und beheizt die Oberfläche der Rippen-Einbaute I7, indem er sie bespült. Die wärmeübertragenden Elemente 5 geben die von den Rippen-Einbauten I7 aufgenommene Wärme an die Rippen-Einbaute I6 und I5 ab. Der kalte Strom der atmosphärischen Luft wird über die Eintrittsöffnung 8 der Sektion 3 zugeleitet und im Bespülen der Oberfläche der Rippen-Einbaute I6 erwärmt und strömt über die Austrittsöffnung 9 in die Kabine, indem er sie beheizt. Gleichzeitig wird eine gewisse Menge von der atmosphärischen oder der Kabine entnommenen Luft über den Stutzen I9 und den geöffneten Schieber 20 der Sektion 4 zugeleitet, (mit Wasser, das von der Oberfläche der Beschichtung 6 dank der Wärme der Rippen-Einbaute I5 verdampft) befeuchtet und strömt über die Eintrittsöffnung 2I auch in die Kabine ein. Ihr Verbrauch sowie der Feuchtigkeitsgrad in der Kabine werden mit dem Schieber 20 eingestellt.

In den Fällen, wo die Befeuchtung in der Kabine nicht erforderlich ist, während die Beheizung der Kabine verstärkt werden muss, wird der Hahn des Reglers 24 geschlossen, dabei enthält die Sektion 4 kein Wasser, und die Beschichtung 6 wird nicht befeuchtet. Der kalte Strom der atmosphärischen Luft wird der Sektion 4 zugeleitet, wird im Bespülen der Oberfläche der Rippen-Einbaute I5 erwärmt und kommt mit dem aus der Sektion 3 austretenden warmen Luftstrom un in die Kabine, indem er sie beheizt, Nach diesem Schema arbeitet die Vorrichtung als Luftheizer.

In Fig. 3 ist eine weitere Ausführungsform des erfindungsgemässen Luftheizers - und -kühlers abgebildet. In dieser Vorrichtung sind die Trennwände 2, I3 im Unterschied zu der vorangehenden Vorrichtung waagerecht und die wärme-

übertragenden Elemente 5 senkrecht angeordnet. Eine solche Bauart lässt eine andere Anordnungslösung realisieren. Bei dieser Bauart kann die Leistungsfähigkeit der Vorrichtung gesteigert werden, und zwar:

a) durch grössere Ausmasse der Rippen-Einbaute und die Berührung zwischen dem oberen Teil der Beschichtung und dem flüssigen Medium,

b) durch den Betrieb der wärmeübertragenden Elemente in günstigen Gravitationsverhältnissen (die Arbeitsflüssigkeit fliesst innerhalb der Elemente in Wirkungsrichtung der Schwerkraft).

In dieser Vorrichtung können als wärmeübertragende Elemente beispielsweise zweiphasige Thermosiphons verwendet werden. Die Arbeitsweise des Luftheizers und -kühlers dieser Ausführungsform ist der obenbeschriebenen ähnlich.

Es ist selbstverständlich, dass sich die vorliegende Erfindung nicht auf die hier beschriebenen und gezeigten Ausführungsformen beschränkt und dass verschiedenen Modifikationen und andere Ausführungsformen des erfindungsgemässen Luftheizers und -kühlers möglich sein können, ohne dass sie vom Umfang und Wesen der Erfindung abweichen.

## Industrielle Verwendbarkeit

Der erfindungsgemässe Luftheizer und -kühler kann zum Vorwärmen und Kühlen der Luft in den Kabinen und den Fahrgasträumen von Verkehrsmitteln, und zwar: Personen- und Lastkraftwagen, Bussen, Traktoren, Mähdreschern, Strassenbaumaschine, Fluss- und Seeschiffen, Flugzeugen und Hubschraubern usw. eingesetzt werden. Wenn die Vorrichtung als Luftheizer betrieben wird, ist es möglich, die Abwärme der Auspuffgase, der heissen Flüssigkeit aus dem Motorkühlsystem, der heissen Abluft u.dgl. zu verwerten. Für diesen Einsatzbereich eignet sich die Ausführungsform der Erfindung nach Fig. I am besten. Nach dieser Variante wird der Luftheizer und -kühler als flacher Block baulich gestaltet, der auf dem Dach, im Kofferraum, in der Kabine oder im Fahrgastraum eines Verkehrsmittels aufgestellt werden kann, und er steht mit der Kabine mittels einer Luftleitung in Verbindung.

Der erfindungsgemässe Luftheizer und -kühler kann auch zum Vorwärmen oder kKühlen der Luft in Produktions- oder Wohnräumen benutzt werden. Als besonders günstig erweist sich der Einsatz der Vorrichtung.

a) in Räumen mit einer hohen Umgebungstemperatur etwa nicht unter 50 bis 70°C, in denen Dampfkompressionskühlmaschinen wegen hoher wärmeträgerdrücke nicht zuverlässig arbeiten können.

b) in Räumen, wo verfahrenstechnische Ströme der warmen Luft im Sommer, der kalten Luft und eines Abwärmeträgers im Winter vorhanden sind, wobei die erfindungsgemässe Vorrichtung überhaupt ohne Energieaufwand betrieben werden kann. Für diese Einsatzbereiche können die beiden Ausführungsformen der Vorrichtung, die in Fig. I, 3 dargestellt sind, benutzt werden. Die Vorrichtung kann auf dem Fussboden oder an der Decke in einem Raum aufgestellt bzw. angebracht, in die Wand unter einem Fenster eingebaut, auf einem Tisch aufgestellt werden usw. Dabei ist für Räume, wo wviel Luft verbraucht wird, wie Produktions-, Zuschauerräume und dgl., die in Fig. 3 dargestellte Ausführung der Vorrichtung günstig, welche in Form eines flachen senkrechten Blocks längs der Wand des Raums angebracht oder in diese eingebaut werden kann.

PATENTANSPRÜCHE

1. Luftheizer und -kühler für die Kabine eines Verkehrsmittels, enthaltend ein Gehäuse (1), welches durch eine Trennwand (2) in eine Sektion (3) für den Durchtritt des zu kühlenden Luftstroms und eine Sektion (4) für den Durchtritt des zu befeuchtenden Luftstroms unterteilt ist, innerhalb des Gehäuses (1) untergebrachte und durch die Trennwand (2) hindurchgehende wärmeübertragende Elemente (5), welche in der Sektion (4) für den Durchtritt des zu befeuchtenden Luftstroms eine kapillarporige Beschichtung (6) aufweisen, die mit dem flüssigen Medium (7) in Berührung steht, im Gehäuse (1) vorgesehene Öffnungen (8, 9, 10, 11) für den Eintritt und Austritt der zu kühlenden Luft bzw. des verwertbaren Wärmeträgers, ein Fenster mit einer regelbaren Klappe (12), das die Sektionen (3, 4) miteinander verbinden und in der genannten Trennwand (2) vorgesehen ist, dadurch g e k e n n z e i c h n e t, dass in ihm eine zusätzliche Trennwand (13) eingebaut ist, die sich zwischen der Wand des Gehäuses (1) und der Haupttrennwand (2) unter Bildung einer Sektion (14) für den Durchtritt des verwertbaren Wärmeträgers befindet, dass die wärmeübertragenden Elemente (5) mit Rippen-Einbauten (15, 16, 17) versehen sind, die in der gebildeten Sektion (14) und in der Sektion (4) für den Durchtritt des zu befeuchtenden Luftstroms auf der Oberfläche der wärmeübertragenden Elemente (5) frei montiert sind, wobei die kapillarporige Beschichtung (6) auf der Oberfläche der Rippen-Einbaute (15) hergestellt ist.

2. Luftheizer und -kühler nach Anspruch 1, dadurch g e k e n n z e i c h n e t, dass der Ausgang der Sektion (4) für den Durchtritt des zu befeuchtenden Luftstroms mit einer Klappe (18) versehen ist und im Bereich dieses Ausgangs ein Stutzen (19) mit einem regelbaren Schieber (20) vorgesehen ist und dass am Gehäuse (1) im Bereich der Öffnung (9) für den Austritt der zu kühlenden Luft eine Öffnung (21) mit einer Klappe (22) vorhanden ist.

3. Luftheizer und -kühler nach Anspruch 1, dadurch g e k e n n z e i c h n e t, dass er einen Flüssigkeitsbehälter (23) mit einem Wasserstandsregler (24) in der Sektion (4) für den Durchtritt der zu befeuchtenden Luft aufweist.

0 335 973

FIG. 1

FIG. 2

212

0 335 973

FIG.3

International Application No PCT/SU 87/00147

## I. CLASSIFICATION OF SUBJECT MATTER (if several classification symbols apply, indicate all) 6

According to International Patent Classification (IPC) or to both National Classification and IPC

IPC$^4$ : B 60 H 1/20

## II. FIELDS SEARCHED

### Minimum Documentation Searched 7

| Classification System | Classification Symbols |
|---|---|
| IPC$^4$: | B 60 H 1/20 |

### Documentation Searched other than Minimum Documentation
### to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | SU, A1, 1057334, (Odessky inzhenerno-stroitelny institut), 30 November 1983 (30.11.83) | 1,3 |
| A | EP, A2, 0189624, (Sanoh Kogyo Kabushiki Kaisha), 6 August 1986 (06.08.86), see pages 11, 12 , figure 1 | 1,2 |
| A | DE, C2, 2334619, (Fa. J.Eberspächer), 18 April 1985 (18.04.85), see the claims, figure 1 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 25 May 1988 (25.05.88) | 01 July 1988 (01.07.88) |
| International Searching Authority | Signature of Authorized Officer |
| ISA/SU | |

Form PCT/ISA/210 (second sheet) (January 1985)